# EUROPÄISCHE PATENTSCHRIFT

(11) **EP 1 336 632 B1**
(45) Veröffentlichungstag und Bekanntmachung des Hinweises auf die Patenterteilung: **29.10.2008**
(21) Anmeldenummer: 03002200.8
(22) Anmeldetag: 04.02.2003
(51) Int. Cl.: C08G 59/18, C08G 59/50, C08K 3/22

(54) **Härtbares, formstabiles Zwei-Komponenten-Reaktionsharz-System auf Epoxidharzbasis**
Curable, dimensionally stable Two-Component-Reactive resin-System based on Epoxyresins
Systeme à deux constituants et à résines réactives durcissables et de dimensions stables, à base des résines époxy

(30) Priorität: 13.02.2002 DE 10205840
(43) Veröffentlichungstag der Anmeldung: 20.08.2003
(73) Patentinhaber: PCI Augsburg GmbH, 86012 Augsburg (DE)
(72) Erfinder: Eisenreich, Andreas, 86343 Königsbrunn (DE); Wache, Steffen, Dr., 86405 Erlingen (DE)
(74) Vertreter: HOFFMANN EITLE

(56) Entgegenhaltungen:
- EP-A- 0 523 610
- EP-A- 0 661 363
- WO-A-86/02661
- WO-A-98/58981
- DE-A- 19 832 668

## Beschreibung

Gegenstand der vorliegenden Erfindung ist die Verwendung eines härtbaren, formstabilen Zwei-Komponenten-Reaktionsharz-Systems auf Epoxidharzbasis als Fugenmörtelmasse oder in Klebstoffsystemen.

Organische, härtbare Zweikomponenten-Massen auf der Grundlage von härtbaren Epoxidharzen und Aminhärtern sind bestens bekannt und werden u.a. als Klebstoffe, Lacke, Beschichtungen, zur Rissverfüllung und zur Befestigung von Verankerungsmittel verwendet. Grundsätzlich besteht bei diesen Mörtelmassen die Schwierigkeit, bei einer gleichzeitig schnellen und vollständigen Aushärtung insbesondere bei tieferen Temperaturen eine ausreichende Verarbeitungszeit einzustellen. Außerdem soll die Masse während und nach der Aushärtung möglichst nicht schwinden und eine niedrige Viskosität haben.

Stand der Technik sind Zwei-Komponenten-Systeme auf Basis von Bisphenol A/F-DGE (Diglycidylether)-Harzen und verschiedenen Diaminen. Extender wie z.B. Benzylalkohol oder Alkylphenole reduzieren dabei die Viskosität der Mischung und können - wie im Falle des Benzylalkohols - auch die Härtungsreaktion beschleunigen und die Netzwerkbildung verbessern.

Die deutsche Offenlegungsschrift DE 198 32 668 beschreibt eine härtbare Zwei-Komponenten-Mörtelmasse mit härtbaren organischen und härtbaren anorganischen Bestandteilen und Härtern, wobei die Härterkomponente von dem jeweiligen härtbaren Bestandteil reaktionsinhibierend getrennt, für die Anwendung aber aktivierbar ist. Diese Masse enthält Epoxidharze und feinteiligen Zement als härtbare Bestandteile sowie Amine und Alkaliwasserglas als Härter. Die Härterkomponente enthält jedoch keinen Extender.

In der europäischen Patentanmeldung EP 1 118 628 wird eine härtbare Epoxidmasse für Mörtelmassen vorgeschlagen, die eine Epoxid-Komponente, Polyamin, Polyacetoacetat und eine Metallverbindung sowie ggf. weitere übliche Bestandteile, wie Füllmittel, Verdünner, Härtungskatalysatoren, Rheologiehilfsmittel, Netzmittel, Farbstoffe usw. enthält. Dabei soll das Polyacetoacetat als Reaktivverdünner die hohe Viskosität des flüssigen Polyepoxids so reduzieren, dass der Gehalt von nicht vernetzendem Verdünner wie z.B. Benzylalkohol auf unter 3 von 100 Massenteile, bezogen auf die Mörtelmasse, gesenkt werden kann. Da Wasser in der Mörtelmischung nicht vorgesehen ist, reagiert der eingesetzte hydraulische Füllstoff nicht, sondern er liegt als "Alkalireserve" in der Mörtelmischung vor, um metallische Anker vor Korrosion bei eindringender Feuchtigkeit, z.B. durch Risse in der Mörtelmasse, zu schützen.

Die Reduzierung von nicht reaktiven Extendern, wie z.B. Benzylalkohol, nach dem oben genannten Dokument ist aber nicht ausreichend, um den Reaktionsschwund zuverlässig und dauerhaft zu kompensieren. So ist bekannt, dass das Auswandern von Extendern zu einem Spätschwinden führt. Speziell bei der Verfugung von Fliesen resultiert daraus ein Abreißen des Fugenmörtels von der Fliese. Neben der Beeinträchtigung des optischen Erscheinungsbildes durch gerissene Fugen und Ausblühungen, sind auch Schäden durch eindringende Feuchtigkeit und sonstige Medien in den Untergrund festzustellen, welche die Funktionsfähigkeit der genannten Konstruktion in Frage stellen können.

Andererseits kann aber auf den Benzylalkohol nicht ohne weiteres verzichtet werden, da ohne ihn zum einen die Viskosität für viele Anwendungsfälle zu hoch ist und zum anderen die Härtungsreaktion zu langsam abläuft, sodass die Oberflächen 24 Stunden nach der Verarbeitung noch klebrig sind.

Das Schwinden herkömmlicher Zweikomponenten-Epoxidharze ist in vielen Anwendungsfällen unerwünscht und führt auch in der Folge vielfach zu Schäden an den Baukonstruktionen. Es gibt somit Bestrebungen, den Schwund von Epoxidharzmörtel zu reduzieren oder sogar einen leichten Quelldruck zu generieren.

Bekannt ist, dass Wasser auf Epoxidharzreaktionen beschleunigend wirken kann (May Epoxy Resins Dekker 1988). Aus der Zugabe von Wasser zu einem lösemittelfreien Epoxidharzsystem resultiert aber, wie dargelegt, nicht akzeptabler Schwund. Wässrige Zwei-Komponenten-Epoxidharzsysteme mit einer wässrigen Härter-Komponente wie zum Beispiel in EP-A-0 000 605 beschrieben und einer Festharzdispersion oder einem emulgierbaren Epoxidharz sind Stand der Technik, aber wegen der geringeren Chemikalienbeständigkeit den reinen, wasserfreien "High solid"-Systemen weit unterlegen.

Aufgrund dieser Erfahrungen erschien der Einsatz von Wasser in härtbaren Reaktionsharz-Systemen bisher als problematisch.

Es hat sich daher die Aufgabe gestellt, ein Reaktionsharz-System zu entwickeln, bei dem das Auftreten von Flankenabrissen beim Aushärten und das Auswandern des Extenders vermieden wird.

Gelöst wurde diese Aufgabe mit einem Zwei-Komponenten-Reaktionsharz-System auf Epoxidbasis, bei dem die Harzkomponente hydraulisch reaktive Bestandteile aufweist und die Härterkomponente Extender enthält, wobei der Extender aus 10 bis 100 Gew.-% Wasser besteht und das Gewichtsverhältnis Wasser zu Härter 1 : 0,1 bis 20,0 beträgt.

Überraschenderweise hat sich mit diesem System auf Epoxidharzbasis herausgestellt, dass der Reaktionsschwund eines "High solid" -Systems durch hydraulische Reaktionen gesteuert werden kann, indem das enthaltene Wasser gebunden wird, dass die Mörtelmasse im ausgehärteten Zustand einen geringeren Schwund aufweist und die Formstabiltät der ausgehärteten Masse durch die Substitution von schwerflüchtigen Extendern durch Wasser erzielt werden kann.

Dies ist umso erstaunlicher, als gemäß dem Stand der Technik das Vorurteil bekannt war, dass bereits die Zugabe von geringen Mengen an Wasser zu einem außergewöhnlich hohen Schwindmaß führt, was einer technischen Realisierung bisher entgegenstand.

Die Wasseranteile am Extender können im Rahmen der vorliegenden Erfindung sehr breit variiert werden und bis zu 100 Gew.-% des Extenders ausmachen. Bevorzugt werden allerdings Systemvarianten, in denen der Extender 30 bis 90 Gew.-% Wasser und insbesondere 50 bis 90 Gew.-% Wasser enthält. In diesen Fällen kann der Extender neben den Wasseranteilen noch andere entsprechend wirksame Bestandteile enthalten, wobei die vorliegende Erfindung dann vorsieht, dass der Extender neben Wasser schwerflüchtige Alkohole, wie z.B. Benzylalkohol, lineare und/oder verzweigte C₁₋₂₀-Alkylphenole, lineare und/oder verzweigte C₁₋₈-Alkoxy-Phenole, wie z.B. Nonylphenol, oder Mischungen daraus enthält. Es kann somit neben Wasser durchaus auch Benzylalkohol als Extenderkomponente verwendet werden, wenn es spezielle Gegebenheiten erforderlich machen sollten, ohne dabei auf die angesprochenen Vorteile verzichten zu müssen. Empfohlen wird lediglich, dass das im Extender enthaltene Wasser auch in der Mischung mit dem Härter gelöst bleibt und es nicht zu einer Phasentrennung kommt.

Als bevorzugte Härter, denen der wässerige Extender zugesetzt wird, haben sich aliphatische, cycloaliphatische oder araliphatische Amine, vorzugsweise Alkylenpolyamin und/oder Mannich-Basen, erwiesen. So kommen Ethylendiamin, IsophoronDiamin, Propylen-Diamin, Hexamethylen-Diamin, DiethylenTriamin, Triethylen-Tetramin, Tetra-Ethylenpentamin und m-Xylylendiamin in Frage, aber auch Kondensationsprodukte von Polyaminen, wie Polyalkylen-Polyamine, mit Aldehyden (wie z.B. Formaldehyd) und ein- oder mehrwertigen Phenolen als typische Vertreter der hochreaktiven Mannich-Basen, wobei sich vor allem solche ohne Restgehalte an Phenolen und toxischen Kondensationsprodukten eignen.

Die Harzkomponente sollte im Rahmen der vorliegenden Erfindung bevorzugt Reaktivverdünner, insbesondere mono- oder difunktionelle Diglycidylether, wie z.B. Hexandiol-Diglycidylether, Butyl-Phenyl-Glycidylether und Kresyl-Phenyl-Glycidylether, Ether von Glycidylalkoholen mit gegebenenfalls alkylsubstituierten mehrwertigen Phenolen, enthalten. Aber auch Polyglycidylether eines mehrwertigen Alkohols oder Phenols wie Ethylenglycol, Glycerin und insbesondere Bisphenol A bis F und/oder Novolak sind als härtbare Harzkomponente geeignet. Insgesamt können dabei die Epoxidequivalentgewichte der im erfindungsgemäßen System eingesetzten Härterkomponente zwischen 150 und 2 000 liegen.

Bzgl. der Harzkomponente sieht die Erfindung bevorzugt vor, dass sie mindestens einen Emulgator aufweist, bei dem es sich insbesondere um einen nicht-ionischen Emulgator, wie z.B. Polyether handelt, der erfindungsgemäß auch zumindest teilweise adduktiert vorliegen kann.

Als hydraulisch reaktive Bestandteile der wasserfreien Harzkomponente bevorzugt die vorliegende Erfindung Calcium-, Silizium-, Aluminium- und Magnesiumoxide und/oder Calciumsulfate und besonders bevorzugt Portlandzement, Aluminatzement, Hochofenzement, Expansivzement und Mischungen daraus. Durch diese Bestandteile, die auch als hydraulisch reaktive Füllstoffe verstanden werden, wird das eingesetzte Wasser ausreichend schnell und vollständig gebunden. Falls erforderlich, können natürlich auch noch entsprechend geeignete Beschleuniger, wie z.B. CaCl₂, oder Verzögerer wie Weinsäure eingesetzt werden. Besonders vorteilhaft für die Produkteigenschaften hat sich der Einsatz der sogenannten Expansiv- oder Quellzemente erwiesen, da mit ihnen hydraulische Reaktionen so gesteuert werden können, dass bei der Bildung bestimmter Mineralphasen eine Expansion eintritt. Speziell im Fugenbereich können die Expansivzemente als hydraulisch reaktive Bestandteile der Harzkomponente den Schwund vollständig kompensieren und/oder einen leichten Quelldruck generieren. Vorzugsweise werden dazu handelsübliche Zusätze aus speziell gebranntem Calciumsulfoaluminat verwendet. Die Expansion kann aber auch über die Zusammensetzung der einzelnen Metalloxide gesteuert werden. Soll das erfindungsgemäße Reaktionsharz-System bspw. in farbigen Verfugungen eingesetzt werden, empfehlen sich als reaktive Füllstoffe weiße Zemente mit sehr niedrigen Eisenoxidgehalten.

Für bestimmte Anwendungsfälle kann das Gewichtsverhältnis des im/als Extender vorhandenen Wassers zum Härter von Bedeutung sein. Neben dem als erfindungswesentlich zu betrachtenden Verhältnis sieht die Erfindung vor, dass dieses Verhältnis bevorzugt 1 : 1,0 bis 5,0 und insbesondere 1 : 1,3 bis 3,0 beträgt.

Ein weiteres wichtiges Gewichtsverhältnis ist das zwischen den hydraulisch reaktiven Bestandteilen und Wasser, das erfindungsgemäß bevorzugt 1 : 0,05 bis 0,5 und besonders bevorzugt 1 : 0,07 bis 0,2 beträgt. Schließlich bevorzugt die vorliegende Erfindung noch ein Verhältnis der Anzahl der Epoxidgruppen der Harzkomponente zu der Anzahl der reaktiven Aminwasserstoffe der Härterkomponente, das 1 : 0,8 bis 2,0 und vorzugsweise 1 : 1,0 bis 1,5 beträgt.

Zu beachten ist dabei lediglich, dass die hydraulischen Bindemittel im Verhältnis zum Wasser so zugegeben werden, dass das Wasser vollständig in Hydratphasen gebunden wird und keine Schwindung durch Verdunsten von Wasser aus der Mörtelmasse erzeugt wird.

Zur Abrundung des Einsatzspektrums des erfindungsgemäß verwendeten Reaktionsharz-Systems sieht die Erfindung bevorzugt vor, dass die Harz- und/oder die Härterkomponente noch Zuschlagsstoffe (wie z.B. Quarz, Sand, Kreide, Korund, Kaolin, Keramik) oder aber auch Leichtfüllstoffe, Fasern, Pigmente, Rheologiehilfsmittel, Thixotropiermittel, Härtungssteuerungsmittel, oberflächenaktive Mittel und Mischungen daraus enthält, wobei Leichtfüllstoffe mit einer Dichte < 2 g/cm³, insbesondere < 1 g/cm³, wie z.B. Blähglasgranulat, bevorzugt werden.

Die Breite der möglichen Varianten erlaubt somit im Rahmen der vorliegenden Erfindung Reaktionsharz-Systeme, deren Empfindlichkeit gegenüber Wasser insbesondere bei emulgatorhaltigen Systemen durch die hydraulisch reaktive Komponente reduziert ist, was insbesondere beim Einsatz in Fugenmörteln von Vorteil sein kann. Trotz der Zugabe von hydraulischen Bindemitteln wird die Chemikalienbeständigkeit des erfindungsgemäßen Mörtels im Vergleich zu handelsüblichen Epoxidharzmörteln aufgrund des niedrigen Wasser/Bindemittelwerts nicht verschlechtert.

Als besonders vorteilhafte Eigenschaft der erfindungsgemäß verwendeten Reaktionsharze haben sich die niedrigen Schwundwerte im ausgehärteten Zustand erwiesen. In einem bevorzugten Aspekt erfasst die vorliegende Erfindung insbesondere Ausführungsformen, bei denen das ausgehärtete System einen Schwund gemäß DIN EN 12808-4 aufweist, der etwa ≤ 0,5 mm/m und ganz besonders bevorzugt ≤ 0,3 mm/m und insbesondere < 0 ist, also in den Quellbereich reicht.

In einem besonders bevorzugten Aspekt betrifft die vorliegende Erfindung die Verwendung von Zwei-Komponenten-Reaktionsharz-Systemen, die eine Harzkomponente und eine Härterkomponente umfassen, wobei die Harzkomponente 12 bis 18 Gew.-% Epoxidharz, 0,3 bis 0,5 Gew.-% Emulgator und 10 bis 30 Gew.-% eines hydraulisch reaktiven Bestandteils ausgewählt aus Portlandzement, Aluminatzement, Hochofenzement, Expansivzement und Mischungen daraus sowie als Rest Quarzsand umfasst und die Härterkomponente 65 bis 75 Gew.-% eines Härters ausgewählt aus Alkylenpolyamin und/oder Mannich-Basen und 25 bis 35 Gew.-% Extender umfasst, wobei der Extender 10 bis 100 Gew.-% Wasser enthält und das Gewichtsverhältnis Wasser zu Härter 1 : 0,1 bis 20,0 beträgt. Insbesondere bevorzugt umfasst die Harzkomponente 14 bis 16 Gew.-% Epoxidharz, 0,4 Gew.-% Emulgator und 15 bis 26 Gew.-% eines hydraulisch reaktiven Bestandteils ausgewählt aus Portlandzement, Aluminatzement, Hochofenzement, Expansivzement und Mischungen daraus sowie als Rest Quarzsand, und die Härterkomponente umfasst 68 bis 72 Gew.-%, vorzugsweise 70 Gew.-%, eines Härters ausgewählt aus Alkylenpolyamin und/oder Mannich-Basen und 28 bis 32 Gew.-%, vorzugsweise 30 Gew.-%, Extender.

Schließlich konnte im Anwendungsbereich als Fugenmörtel eine deutlich ausgeprägte biozide und algizide Wirkung beobachtet werden, die wohl auf die enthaltenen hydraulischen Bindemittel zurückzuführen ist, aber von vornherein nicht unbedingt zu erwarten war.

Unter anderem aufgrund des letztgenannten Vorteils hat sich als bevorzugter Verwendungsbereich für das erfindungsgemäß verwendete Reaktionsharz-System der Lebensmittel- und Trinkwasserbereich gezeigt, was von der vorliegenden Erfindung ebenfalls berücksichtigt wird.

Die nachfolgenden Beispiele veranschaulichen die vorteilhaften Eigenschaften des vorgeschlagenen härtbaren Zwei-Komponenten-Reaktionsharz-Systems, das erfindungsgemäß als Fugenmörtelmasse und in Klebstoff-Systemen eingesetzt wird..

### Beispiele:

Die nachfolgenden Rezepturen bedienen sich jeweils einer Harzkomponente (1) und einer Härterkomponente (2). Dabei sind die Rezepturen 1 und 2 Vergleichsbeispiele aus dem Stand der Technik, die Rezepturen 3 bis 5 sind Erfindungsbeispiele.

### Rezeptur 1:

(1):
   14,3 Gew.-% Epoxidharz (EP-Equivalent 205)
   0,4 Gew.-% Emulgator (Rizinusölethoxylat)
   19,6 Gew.-% Kreide
   58,9 Gew.-% Sand 0,1-0,3 mm
(2):
   4,3 Gew.-% Polyamin (NH-Equivalent 63)
   1,6 Gew.-% Benzylalkohol
   0,8 Gew.-% Nonylphenol

### Rezeptur 2:

(1) :
   14,4 Gew.-% Epoxidharz (EP-Equivalent 205)
   0,4 Gew.-% Emulgator (Rizinusölethoxylat)
   19,7 Gew.-% Kreide
   59,2 Gew.-% Sand 0,1-0,3 mm
(2):
   4,3 Gew.-% Polyamin (NH-Equivalent 63)
   2,0 Gew.-% Wasser

### Rezeptur 3:

(1):
   14,4 Gew.-% Epoxidharz (EP-Equivalent 205)
   0,4 Gew.-% Emulgator (Rizinusölethoxylat)
   17,7 Gew.-% Portlandzement CEM I 42,5
   2,0 Gew.-% Tonerdezement Secar 71
   59,1 Gew.-% Sand 0,1-0,3 mm
(2):
   4,3 Gew.-% Polyamin (NH-Equivalent 63)
   2,0 Gew.-% Wasser
   0,04 Gew.-% Weinsäure

### Rezeptur 4:

(1):
   14,4 Gew.-% Epoxidharz (EP-Equivalent 205)
   0,4 Gew.-% Emulgator
   15,8 Gew.-% Portlandzement CEM I 42,5
   6,9 Gew.-% Denka CSA (Handelsware Calciumsulfoaluminat)
   56,2 Gew.-% Sand 0,1 - 0,3 mm
(2):
   4,3 Gew.-% Polyamin (NH-Equivalent 63)
   2,0 Gew.-% Wasser

### Rezeptur 5:

(1):
   0,4 Gew.-% Emulgator
   15,8 Gew.-% Portlandzement CEM 142,5
   10 Gew.-% Denka CSA (Handelsware Calciumsulfoaluminat)
   14,4 Gew.-% Epoxidharz (EP-Equivalent 205)
   53,1 Gew.-% Sand 0,1 - 0,3 mm
(2):
   4,3 Gew.-% Polyamin (NH-Equivalent 63)
   2,0 Gew.-% Wasser

| Rezeptur | Schwindmaß nach 28 Tagen |
|---|---|
| 1 (Vergleich) | 0,8 mm/m |
| 2 (Vergleich) | 15,0 mm/m |
| 3 | 0,5 mm/m |
| 4 | 0,3 mm/m |
| 5 | - 0,1 mm/m * |

| | |
|---|---|
| * Das negative Schwindmaß bedeutet ein Expandieren des Probekörpers. | |

Das "Schwindmaß" wurde jeweils an Probekörpern der Maße 10 mm x 40 mm x 160 mm gemäß DIN EN 12808-4 bestimmt.

## Patentansprüche

1. Verwendung eines härtbaren, formstabilen ZweiKomponenten-Reaktionsharz-Systems auf Epoxidharzbasis als Fugenmörtelmasse oder in Klebstoffsystemen, wobei das Reaktionsharz-System im ausgehärteten Zustand niedrige Schwundwerte aufweist, die Harz- und Härterkomponenten vor der Verarbeitung getrennt vorliegen, die Harzkomponente hydraulisch reaktive Bestandteile aufweist, die Härterkomponente Extender enthält, wobei der Extender aus 10 bis 100 Gew.-% Wasser besteht, und das Gewichtsverhältnis Wasser zu Härter 1 zu 0,1 bis 20,0 beträgt.

2. Verwendung gemäß Anspruch 1, wobei der Extender des Reaktionsharz-Systems 30 bis 90 Gew.-% Wasser enthält.

3. Verwendung gemäß Anspruch 2, wobei der Extender des Reaktionsharz-Systems 50 bis 90 Gew.-% Wasser enthält.

4. Verwendung gemäß nach einem der Ansprüche 1 bis 3, wobei der Extender des Reaktionsharz-Systems neben Wasser schwerflüchtige Alkohole, lineare und/oder verzweigte C₁₋₂₀- Alkylphenole, lineare und/oder verzweigte C₁₋₈-Alkoxy-Phenole oder Mischungen daraus enthält.

5. Verwendung gemäß einem der Ansprüche 1 bis 4, wobei aliphatische, cycloaliphatische oder araliphatische Amine als Härter im Reaktionsharz-System enthalten sind.

6. Verwendung gemäß Anspruch 5, wobei Alkylenpolyamin und/oder Mannich-Basen als Härter im Reaktionsharz-System enthalten sind.

7. Verwendung gemäß einem der Ansprüche 1 bis 6, wobei die Harzkomponente des Reaktionsharz-Systems Reaktivverdünner enthält.

8. Verwendung gemäß Anspruch 7 wobei die Harzkomponente mono- oder difunktionelle Diglycidylether und/oder Ether von Glycidylalkoholen mit gegebenenfalls alkylsubstituierten mehrwertigen Phenolen als Reaktivverdünner enthält.

9. Verwendung gemäß einem der Ansprüche 1 bis 8, wobei die Harzkomponente des Reaktionsharz-Systems mindestens einen Emulgator aufweist.

10. Verwendung gemäß Anspruch 9, wobei die Harzkomponente einen nichtionischen Emulgator aufweist.

11. Verwendung gemäß einem der Ansprüche 9 oder 10, wobei mindestens ein Emulgator adduktiert vorliegt.

12. Verwendung gemäß einem der Ansprüche 1 bis 11, wobei die Harzkomponente des Reaktionsharz-Systems als hydraulisch reaktive Bestandteile Calcium-, Silizium-, Aluminium- und Magnesiumoxide und/oder Calciumsulfate enthält.

13. Verwendung gemäß Anspruch 12, wobei die Harzkomponente als hydraulisch reaktive Bestandteile Portlandzement, Aluminatzement, Hochofenzement, Expansivzement und Mischungen daraus enthält.

14. Verwendung gemäß einem der Ansprüche 1 bis 13, wobei das Gewichtsverhältnis Wasser zu Härter des Reaktionsharz-Systems 1 : 1,0 bis 5,0 beträgt.

15. Verwendung gemäß Anspruch 14, wobei das Gewichtsverhältnis Wasser zu Härter 1 : 1,3 bis 3,0 beträgt.

16. Verwendung gemäß einem der Ansprüche 1 bis 15, wobei das Gewichtsverhältnis der hydraulisch reaktiven Bestandteile zu Wasser im Reaktionsharz-System 1 : 0,05 bis 0,5 beträgt.

17. Verwendung gemäß einem der Ansprüche 1 bis 16, wobei das Verhältnis der Anzahl der Epoxidgruppen der Harzkomponente zu der Anzahl der reaktiven Aminwasserstoffe der Härterkomponente im Reaktionsharz-System 1 : 0,8 bis 2,0 beträgt.

18. Verwendung gemäß einem der Ansprüche 1 bis 17, wobei die Harz- und/oder die Härterkomponente des Reaktionsharz-Systems Zuschlagsstoffe, Leichtfüllstoffe, Fasern, Pigmente, Rheologiehilfsmittel, Thixotropiermittel, Härtungssteuerungsmittel, oberflächenaktive Mittel und Mischungen daraus enthalten.

19. Verwendung gemäß Anspruch 18, wobei als Zuschlagsstoffe Leichtfüllstoffe mit einer Dichte < 2 g/cm³ verwendet werden.

20. Verwendung gemäß einem der Ansprüche 1 bis 19, wobei das ausgehärtete Reaktionsharz-System einen Schwund gemäß DIN EN 12808-4 von s 0,5 mm/m aufweist.

21. Verwendung gemäß einem der Ansprüche 1 bis 20, wobei die Fugenmörtelmasse oder das Klebstoffsystem im Lebensmittel- und Trinkwasserbereich eingesetzt wird.

## Claims

1. Use of a curable, dimensionally stable two-component reactive resin system based on epoxy resin as jointing mortar composition or in adhesive systems, wherein the reactive resin system in the cured state has low shrinkage values, the resin and curing agent components exist separately before processing, the resin component has hydraulically reactive constituents, the curing agent component contains extender, wherein the extender consists of 10 to 100 wt.% of water, and the weight ratio water to curing agent is 1 to 0.1 to 20.0.

2. Use according to claim 1, wherein the extender of the reactive resin system contains 30 to 90 wt.% of water.

3. Use according to claim 2, wherein the extender of the reactive resin system contains 50 to 90 wt.% of water.

4. Use according to one of claims 1 to 3, wherein the extender of the reactive resin system contains, in addition to water, low-volatility alcohols, linear and/or branched C₁₋₂₀ alkylphenols, linear and/or branched C₁₋₈ alkoxyphenols or mixtures thereof.

5. Use according to one of claims 1 to 4, wherein aliphatic, cycloaliphatic or araliphatic amines are present as curing agents in the reactive resin system.

6. Use according to claim 5, wherein alkylene polyamine and/or Mannich bases are present as curing agents in the reactive resin system.

7. Use according to one of claims 1 to 6, wherein the resin component of the reactive resin system contains reactive thinners.

8. Use according to claim 7, wherein the resin component contains monofunctional or difunctional diglycidyl ethers and/or ethers of glycidyl alcohols with optionally alkyl-substituted polyhydric phenols as reactive thinners.

9. Use according to one of claims 1 to 8, wherein the resin component of the reactive resin system has at least one emulsifier.

10. Use according to claim 9, wherein the resin component has a non-ionic emulsifier.

11. Use according to one of claims 9 or 10, wherein at least one emulsifier is present in adduct form.

12. Use according to one of claims 1 to 11, wherein the resin component of the reactive resin system contains calcium oxides, silicon oxides, aluminium oxides and magnesium oxides and/or calcium sulphates as hydraulically reactive constituents.

13. Use according to claim 12, wherein the resin component contains Portland cement, aluminate cement, blast-furnace cement, expansive cement and mixtures thereof as hydraulically reactive constituents.

14. Use according to one of claims 1 to 13, wherein the weight ratio water to curing agent of the reactive resin system is 1 : 1.0 to 5.0.

15. Use according to claim 14, wherein the weight ratio water to curing agent is 1 : 1.3 to 3.0.

16. Use according to one of claims 1 to 15, wherein the weight ratio of the hydraulically reactive constituents to water in the reactive resin system is 1 : 0.05 to 0.5.

17. Use according to one of claims 1 to 16, wherein the ratio of the number of epoxy groups of the resin component to the number of reactive amine hydrogens of the curing agent component in the reactive resin system is 1 : 0.8 to 2.0.

18. Use according to one of claims 1 to 17, wherein the resin and/or the curing agent component of the reactive resin system contain additives, light-weight fillers, fibres, pigments, rheological auxiliaries, thixotropic agents, curing-control agents, surfactants and mixtures thereof.

19. Use according to claim 18, wherein light-weight fillers having a density < 2 g/cm³ are used as additives.

20. Use according to one of claims 1 to 19, wherein the cured reactive resin system has a shrinkage according to DIN EN 12 808-4 of ≤ 0.5 mm/m.

21. Use according to one of claims 1 to 20, wherein the jointing mortar composition or the adhesive system is used in the foodstuffs and drinking water field.

## Revendications

1. Utilisation de systèmes de résine réactive à deux composants, durcissables, indéformables, à base de résine époxyde, comme masse de mortier de jointoiement ou dans des systèmes de colle, où le système de résine réactive présente à l'état durci, une faible valeur de retrait, les composants de résine et durcisseur sont présents à l'état séparé avant le traitement, le composant de résine présente des constituants réactifs hydrauliques, le composant durcisseur contient un diluant, où le diluant consiste en 10 à 100% en poids d'eau, et le rapport pondéral de l'eau au durcisseur se situe dans l'intervalle allant de 1:0,1 à 20,0.

2. Utilisation selon la revendication 1, où le diluant du système de résine réactive contient 30 à 90% en poids d'eau.

3. Utilisation selon la revendication 2, où le diluant du système de résine réactive contient 50 à 90% en poids d'eau.

4. Utilisation selon l'une des revendications 1 à 3, où le diluant du système de résine réactive contient en plus de l'eau, des alcools difficilement volatils, des (alkyl en C₁₋₂₀) phénols linéaires et/ou ramifiés, des (alcoxy en C₁₋₈) phénols linéaires et/ou ramifiés, ou leurs mélanges.

5. Utilisation selon l'une des revendications 1 à 4, où des amines aliphatiques, cycloaliphatiques ou araliphatiques sont présentes comme durcisseur dans le système de résine réactive.

6. Utilisation selon la revendication 5, où des alkylènepolyamines et/ou des bases de Mannich sont présents comme durcisseur dans le système de résine réactive.

7. Utilisation selon l'une des revendications 1 à 6, où le composant de résine du système de résine réactive contient un agent de dilution réactif.

8. Utilisation selon la revendication 7, où le composant de résine contient des diglycidyléthers mono- ou difonctionnels et/ou des éthers de glycidylalcools avec des phénols polyvalents le cas échéant substitués par groupe alkyle comme agent de dilution réactif.

9. Utilisation selon l'une des revendications 1 à 8, où le composant de résine du système de résine réactive présente au moins un émulsionnant.

10. Utilisation selon la revendication 9, où le composant de résine présente un émulsionnant non ionique.

11. Utilisation selon l'une des revendications 9 ou 10, où au moins un émulsionnant est présent sous forme d'adduit.

12. Utilisation selon l'une des revendications 1 à 11, où le composant de résine du système de résine réactive contient comme constituant réactif hydraulique, l'oxyde de calcium, de silicium, d'aluminium et de magnésium et/ou le sulfate de calcium.

13. Utilisation selon la revendication 12, où le composant de résine contient comme constituant réactif hydraulique, le ciment Portland, le ciment aluminate, le ciment de haut-fourneau, le ciment expansif et leurs mélanges.

14. Utilisation selon l'une des revendications 1 à 13, où le rapport pondéral de l'eau au durcisseur du système de résine réactive se situe à 1:1,0 à 5,0.

15. Utilisation selon la revendication 14, où le rapport pondéral de l'eau au durcisseur se situe à 1:1,3 à 3,0.

16. Utilisation selon l'une des revendications 1 à 15, où le rapport pondéral du constituant réactif hydraulique à l'eau du système de résine réactive se situe à 1:0,05 à 0,5.

17. Utilisation selon l'une des revendications 1 à 16, où le rapport du nombre de groupes époxydes du composant de résine au nombre d'hydrogènes réactifs d'amine du composant durcisseur dans le système de résine réactive se situe à 1:0,8 à 2,0.

18. Utilisation selon l'une des revendications 1 à 17, où les composants de résine et/ou durcisseur du système de résine réactive contiennent des additifs, des charges légères, des fibres, des pigments, auxiliaires de rhéologie, des agents thixotropes, des agents réglant le durcissement, des agents tensioactifs et leurs mélanges.

19. Utilisation selon la revendication 18, où l'on utilise comme additif, des charges légères avec une masse spécifique < 2 g/cm³.

20. Utilisation selon l'une des revendications 1 à 19, où le système de résine réactive durci présente un retrait selon DIN EN 12808-4 de ≤ 0,5 mm/m.

21. Utilisation selon l'une des revendications 1 à 20, où la masse de mortier de jointoiement ou le système de colle est mis en oeuvre dans le domaine alimentaire et de l'eau potable.
